# FASCICULE DE BREVET EUROPEEN

(11) **EP 0 770 472 B1**
(45) Date de publication et mention de la délivrance du brevet: **29.12.1999**
(21) Numéro de dépôt: 96402266.9
(22) Date de dépôt: 24.10.1996
(51) Int. Cl.: B29C 70/48

(54) **Procédé de fabrication d'un panneau en matériau composite avec moulage par transfert de résine**
Verfahren zur Herstellung einer Platte aus Verbundmaterial durch Transfer-Giessverfahren
Process for manufacturing a panel in a composite material by resin transfer moulding

(30) Priorité: 27.10.1995 FR 9512727
(43) Date de publication de la demande: 02.05.1997
(73) Titulaire: AEROSPATIALE Société Nationale Industrielle, 75781 Paris Cédex 16 (FR)
(72) Inventeur: Guittard, Dominique, 75016 Paris (FR); Soro, Daniel, 93800 Epinay sur Seine (FR)
(74) Mandataire: Dubois-Chabert, Guy

(56) Documents cités:
- EP-A- 0 366 979
- EP-A- 0 441 249
- EP-A- 0 722 825
- WO-A-91/00171
- FR-A- 2 440 261
- US-A- 4 891 176

## Description

### Domaine technique

L'invention concerne un procédé de fabrication d'un panneau sandwich en matériau composite comprenant une âme formée d'une structure à cellules ouvertes, telle qu'une structure en nid d'abeilles ou en mousse à cellules ouvertes, et au moins une peau formée de fibres et de résine. Plus précisément, l'invention concerne un procédé de fabrication d'un tel panneau, dans lequel la peau est formée sur l'âme à cellules ouvertes selon la technique de moulage par transfert de résine.

Une application particulière de l'invention concerne la réalisation de panneaux d'habillage et de cloisonnement dans les aéronefs. De façon plus générale, l'invention peut toutefois être utilisée pour réaliser tous panneaux devant présenter une bonne tenue mécanique et un très bon aspect de surface pour une masse particulièrement faible.

### Etat de la technique

Les panneaux en matériau composite présentant une structure sandwich sont habituellement fabriqués par drapage selon des techniques couramment utilisées pour la fabrication des pièces en matériau composite. Ces techniques de fabrication consistent à draper des fibres imprégnées de résine sur au moins l'une des faces d'une âme en un matériau alvéolé tel qu'une mousse ou une structure en nid d'abeilles. Lorsque le drapage est terminé, l'ensemble est placé dans une étuve ou dans un autoclave afin de polymériser la résine.

Dans certaines industries telles que l'industrie aéronautique, cette technique traditionnelle de fabrication des pièces en matériau composite tend à être supplantée par une technique de moulage par transfert de résine, dite technique RTM ("Resin Transfer Molding") lorsque les pièces à fabriquer présentent une structure monolithique. Selon cette technique, différentes couches de fibres non imprégnées de résine sont placées dans un moule qui présente la forme de la pièce à réaliser. Les fibres peuvent être tissées ou non tissées, selon la nature de la pièce. Le moule étant chauffé à une température relativement importante, une résine présentant une très faible viscosité est injectée sous pression dans le moule sous vide, de façon à remplir totalement le moule en imprégnant les fibres et en remplissant les espaces qui les séparent. Lorsque l'injection de la résine est terminée, la pièce est soumise à un cycle de polymérisation avant d'être démoulée.

Par rapport à la technique classique de fabrication des pièces en matériau composite par dragage, cette technique de moulage par transfert de résine présente des avantages de mise en oeuvre importants qui expliquent sont succès grandissant. De plus, elle assure une reproductibilité parfaite des pièces ainsi qu'un état de surface sensiblement amélioré.

Jusqu'à présent, cette technique de moulage par transfert de résine n'a cependant pas pu être utilisée pour la fabrication de panneaux présentant une structure sandwich, notamment lorsque la structure alvéolée formant l'âme du panneau comporte des alvéoles qui débouchent sur ses deux faces, comme c'est le cas lorsque l'âme du panneau est constituée par une structure en nid d'abeilles ou par une mousse à cellules ouvertes. En effet, l'utilisation de la technique de moulage par transfert de résine pour la fabrication de tels panneaux conduirait à remplir les alvéoles de résine, compte tenu de la viscosité très faible des résines utilisées, ainsi que des températures et pressions relativement élevées inhérentes à cette technique. Si le remplissage des alvéoles de l'âme en nid d'abeilles d'un panneau ainsi fabriqué serait acceptable du point de vue de la tenue mécanique de ce panneau, il entraînerait une augmentation de masse inacceptable dans des industries telles que l'industrie aéronautique.

Pour remédier à cet inconvénient il a été envisagé de remplir de mousse les alvéoles de l'âme en nid d'abeilles. Cependant, si cette technique est acceptable du point de vue de la masse du panneau obtenu, qui se trouve augmentée de façon peu importante, elle n'est pas utilisable sur des panneaux non plans. En effet, la mise en forme du panneau qui doit précéder l'injection de la résine se traduit inévitablement par la création de vides entre la mousse et les parois des alvéoles. Ces vides sont remplis de résine lors de l'injection de celle-ci, ce qui conduit là encore à une augmentation inacceptable de la masse du panneau.

Une autre technique envisagée afin d'éviter la pénétration de la résine dans les alvéoles de l'âme en nid d'abeilles consiste à utiliser des colles intumescentes dont le coefficient d'expansion d'environ 300 % a pour effet de combler les cellules de l'âme en nid d'abeilles. Cependant, cette technique est également très pénalisante en ce qui concerne la masse du panneau obtenu.

Par ailleurs, il est connu du document US-A-5 141 804 de réaliser une structure sandwich, selon la technique classique du drapage, en interposant entre les couches adjacentes de fibres préimprégnées de résine un film intermédiaire thermoplastique revêtu d'un adhésif sur ses deux faces, afin d'améliorer la cohésion et la solidité de la structure obtenue. Dans le cas où la structure sandwich comporte une âme en nid d'abeilles, des films intermédiaires enduits de colle sont interposés, dans le même but, entre cette âme en nid d'abeilles et les couches de fibres préimprégnées de résine qui lui sont adjacentes. La polymérisation de la résine et le collage des différentes couches sont réalisés simultanément par l'application d'un cycle de température et de pression approprié.

Le document EP-A-0 722 825, compris dans l'état de la technique aux termes de l'article 54(3) CBE, décrit un procédé de fabrication d'un panneau sandwich par la technique RTM. Selon ce procédé, on interpose un film de colle non polymérisable et une couche d'un matériau préimprégné de résine non polymérisée, entre l'âme en nid d'abeilles du panneau et des couches de préformes fibreuses destinées à former les peaux du panneau. Après mise en place de l'ensemble dans un moule et fermeture de celui-ci, on polymérise simultanément les films de colle et les couches de matériau préimprégné. Conformément à la technique RTM, on injecte ensuite de la résine dans le moule, puis on la polymérise avant de procéder à l'ouverture du moule.

### Exposé de l'invention

L'invention a principalement pour objet un procédé de fabrication d'un panneau en matériau composite comprenant une âme à cellules ouvertes, permettant d'utiliser la technique de moulage par transfert de résine en évitant la pénétration de la résine ou de toute autre matière dans les alvéoles de l'âme à cellules ouvertes, de façon à limiter la masse du panneau à un niveau acceptable en aéronautique, que le panneau soit plan ou non.

L'invention a aussi pour objet un procédé de fabrication d'un panneau sandwich en matériau composite dont la durée de mise en oeuvre n'est que légèrement supérieure à la durée du moulage par transfert de résine et qui ne nécessite aucun autre outillage que ceux qui sont habituellement utilisés pour la mise en oeuvre de cette technique de moulage.

Conformément à l'invention, ces résultats sont obtenus au moyen d'un procédé de fabrication d'un panneau en matériau composite, comprenant une âme à cellules ouvertes, au moins une peau formée de fibres et de résine, et une membrane étanche interposée entre l'âme et la peau, ce procédé comprenant les étapes suivantes :
- mise en place de l'âme, d'un film de colle non polymérisée, de la membrane étanche et des fibres sèches, dans cet ordre, à l'intérieur d'un moule ;
- fermeture du moule ;
- polymérisation de la colle dans le moule fermé, de façon à coller la membrane étanche sur l'âme à cellules ouvertes ;
- injection de résine dans le moule, sans ouverture de celui-ci, de façon à imprégner les fibres ;
- polymérisation de la résine dans le moule, sans ouverture de celui-ci, de façon à former la peau ; et
- démoulage du panneau ainsi obtenu.

De préférence, la polymérisation de la colle s'effectue à une première température et l'injection de la résine à une deuxième température au plus légèrement supérieure à la première température.

Dans une première forme de mise en oeuvre du procédé, la première et la deuxième températures sont égales. L'injection de la résine est alors effectuée immédiatement après la polymérisation de la colle.

Au contraire, dans une deuxième forme de mise en oeuvre du procédé, la première et la deuxième températures sont différentes. La polymérisation de la colle est alors suivie d'une étape d'adaptation de la température du moule préalable à l'injection de la résine.

Selon le cas, on peut utiliser soit un film de colle non supporté, soit un film de colle supporté par un tissu léger.

Avantageusement, la fermeture du moule est précédée de la mise en place à l'intérieur de celui-ci de plaques de protection encerclant les bordures périphériques de l'âme à cellules ouvertes. Ces plaques de protection permettent d'éviter que la résine sous pression n'endommage les parois des alvéoles périphériques, lors de l'injection de la résine.

Lorsqu'on désire fabriquer un panneau comprenant deux peaux, on place dans le moule un film de colle non polymérisée, une membrane étanche et des fibres sur chaque face de l'âme à cellules ouvertes.

Le procédé selon l'invention peut être utilisé aussi bien lorsque l'âme à cellules ouvertes est constituée par une structure en nid d'abeilles que lorsqu'il s'agit d'une mousse à cellules ouvertes.

### Brève description des dessins

On décrira à présent, à titre d'exemple non limitatif, une forme de mise en oeuvre préférentielle du procédé selon l'invention, en se référant aux dessins annexés, dans lesquels :
- la figure 1 est une vue en perspective avec arrachements en coupe représentant un moule fermé dans lequel ont été placés les différents éléments constitutifs d'un panneau en matériau composite dont la fabrication inclut, conformément à l'invention, la technique de moulage par transfert de résine ; et
- la figure 2 représente, en trait plein, l'évolution de la température T en fonction du temps t et, en traits discontinus, l'évolution de la pression P en fonction du temps t lors de la mise en oeuvre du procédé selon l'invention.

### Exposé détaillé d'une forme de mise en oeuvre

Le procédé de fabrication selon l'invention va être décrit dans le cadre de son application à la fabrication d'un panneau plan comprenant une âme en nid d'abeilles dont les deux faces sont recouvertes d'une peau formée de fibres et de résine. Toutefois, ce procédé peut aussi s'appliquer à la fabrication d'un panneau présentant une certaine courbure ainsi qu'à la fabrication d'un panneau comportant une peau recouvrant seulement l'une des faces de l'âme en nid d'abeilles et à la fabrication d'un panneau dont l'âme est constituée par une mousse à cellules ouvertes.

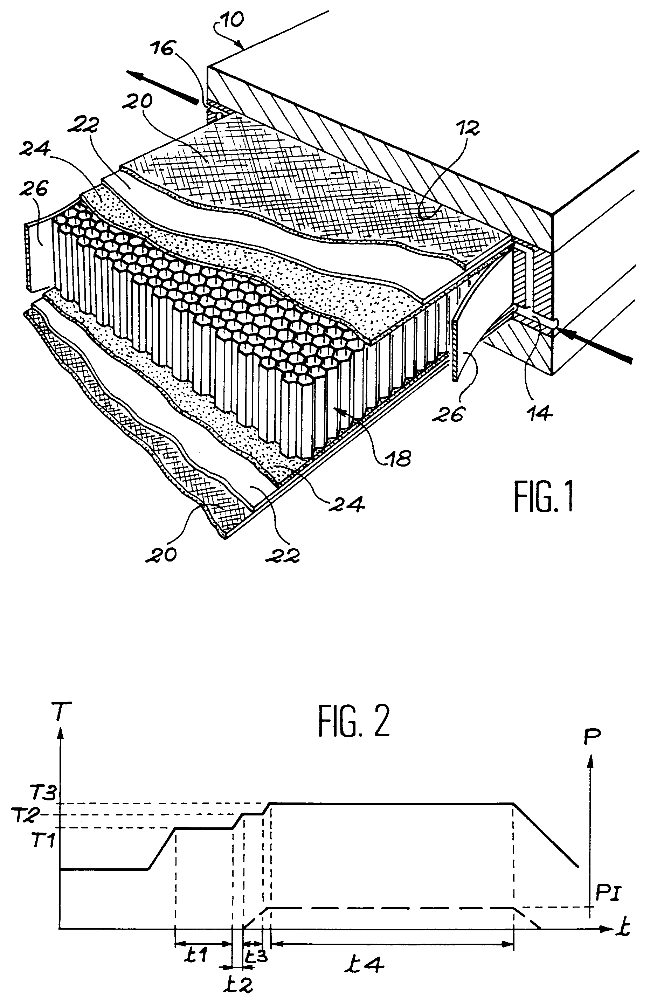

Sur la figure 1, la référence 10 désigne de façon générale un moule en plusieurs parties, qui délimite intérieurement une empreinte 12 dont la forme est complémentaire de celle du panneau à fabriquer.

Comme on l'a illustré de façon très schématique sur la figure 1, le moule 10 est équipé de moyens permettant de mettre en oeuvre la technique de moulage par transfert de résine. Ces moyens comprennent notamment au moins un passage 14 d'injection de résine, qui débouche de préférence dans l'empreinte 12 à proximité de chacune des faces en regard de cette empreinte destinée à former les faces du panneau à fabriquer. Les moyens de mise en oeuvre de la technique de moulage par transfert de résine comprennent également au moins un passage 16 de mise en dépression de l'empreinte 12 et d'évacuation de la résine injectée en excédant. Ce passage 16 est situé sur un côté du moule 10 opposé à celui sur lequel débouche le passage 14, et il débouche également dans l'empreinte 12 à proximité immédiate des faces en vis-à-vis de cette empreinte.

Dans un premier temps, le moule 10 est ouvert et on place à l'intérieur de l'empreinte 12 les différents éléments destinés à former le panneau à fabriquer.

Dans la forme de réalisation décrite, qui concerne la fabrication d'un panneau comprenant deux peaux, ces éléments comprennent une âme 18 en nid d'abeilles interposée entre deux couches de fibres 20 destinées à former les peaux du panneau. Il est à noter que les fibres 20 sont sèches, c'est-à-dire non imprégnées de résine et qu'elles peuvent selon le cas être constituées d'une ou plusieurs épaisseurs de fibres tissées ou non tissées. La nature des fibres dépend bien entendu de la pièce à réaliser. Il peut, par exemple, s'agir de fibres de carbone mais aussi de tout autre type de fibres, sans sortir du cadre de l'invention.

Conformément à l'invention, les éléments placés dans l'empreinte 12 avant la fermeture du moule 10 comprennent de plus une membrane étanche 22, interposée entre chacune des couches de fibres 20 et l'âme 18 en nid d'abeilles, ainsi qu'un film de colle 24 interposé entre chaque membrane étanche 22 et la face en vis-à-vis de l'âme 18 en nid d'abeilles.

Chacune des membranes étanches 22 est constituée par un film étanche de très faible épaisseur qui a pour fonction d'empêcher que la résine, qui doit être ultérieurement injectée sous pression par le passage 14 lors de la réalisation du moulage par transfert de résine, pénètre dans les alvéoles de l'âme 18 en nid d'abeilles.

Les membranes étanches 22 peuvent être réalisées en tout matériau susceptible de garder l'étanchéité requise dans les conditions relativement sévères de température et de pression qui caractérisent l'injection de la résine. L'épaisseur des membranes dépend également des dimensions des alvéoles de l'âme 18 en nid d'abeilles. En outre, les membranes étanches 22 doivent pouvoir supporter un allongement relativement important et s'accrocher efficacement sur les films de colle 24 ainsi que sur la résine injectée ultérieurement par le passage 14. A titre d'exemple nullement limitatif, les membranes étanches 22 peuvent être réalisées en polyamide 6.6 ou en polyéther-éther-ketone ("PEEK"). Le traitement de surface des membranes doit être tel qu'elles adhèrent sur leur deux faces d'une part sur le film de colle 24, d'autre part sur la résine qui sera injectée dans les fibres 20.

Les films de colle 24 sont destinés à fixer les membranes étanches 22 sur les deux faces de l'âme 18 en nid d'abeilles, avant que la résine ne soit injectée dans l'empreinte 12 par le passage 14. Ils peuvent être formés de colle non supportée ou de colle supportée par un tissu léger, de façon à optimiser la masse du panneau obtenu. Les caractéristiques mécaniques des films de colle 24 sont choisies afin de répondre aux exigences de bonne tenue de la structure du panneau lorsque celui-ci est terminé.

La nature de la colle utilisée pour former les films de colle 24 est choisie principalement en fonction de la température de polymérisation de cette colle. En effet, étant donné que cette colle doit être polymérisée avant l'injection, puis la polymérisation de la résine, elle doit pouvoir supporter les conditions de température imposées par ces deux dernières opérations. A cet effet, de nombreuses colles époxy peuvent être utilisées. A titre d'exemples, on citera la colle BSD 322 de CIBA-GEIGY (de classe 180°C) et la colle FM 123-2 (de classe 120°C).

En plus des éléments constitutifs du panneau que l'on désire fabriquer, il est recommandé de placer dans l'empreinte 12 du moule 10 des plaques de protection 26 destinées à empêcher que la résine qui sera injectée ultérieurement ne déforme les cloisons des alvéoles périphériques de l'âme 18 en nid d'abeilles. A cet effet, les plaques de protection 26 peuvent être placées tout autour de l'âme 18 en nid d'abeilles de façon à encercler étroitement les bordures périphériques de celle-ci, comme l'illustre la figure 1. Ces plaques 26 sont avantageusement reliées de façon étanche aux bords des membranes étanches 22, par exemple au moyen d'une pâte siliconée, de telle sorte que leur positionnement soit préservé et que l'étanchéité soit assurée.

Il est à noter qu'en variante, l'utilisation des plaques de protection 26 peut être évitée, par exemple en donnant à l'empreinte 12 une forme adaptée et en assurant l'injection et l'extraction de la résine par des passages 14 et 16 débouchant au plus près des faces en regard de l'empreinte 12.

Lorsque tous les éléments décrits précédemment ont été placés dans l'empreinte 12, le moule 10 est fermé (figure 1) et la température est élevée progressivement jusqu'à une valeur T1 (figure 2) correspondant à la température de polymérisation de la colle de chacun des films de colle 24. Cette température de polymérisation T1 dépend de la nature de la colle utilisée. A titre d'exemple nullement limitatif, elle peut être d'environ 120°C. La durée tl du chauffage à cette température T1 est choisie afin de garantir l'achèvement du cycle de polymérisation de la colle. Cette durée tl peut, à titre d'exemple non limitatif, être comprise entre environ 15 min et environ 30 min.

Lorsque le cycle de polymérisation des films de colle 24 est terminé, les membranes étanches 22 sont collées sur chacune des faces de l'âme 18 en nid d'abeilles, de telle sorte que les alvéoles de cette âme 18 sont obturées de façon étanche.

A ce stade, le moule 10 est maintenu fermé et la température est soit inchangée si la température T2 d'injection de la résine est la même que la température T1 de polymérisation de la colle, soit adaptée à la température T2 d'injection de la résine si ces deux températures sont différentes. De façon générale, il est à noter que la température T2 d'injection de la résine est au plus légèrement supérieure à la température T1 de polymérisation de la colle.

La figure 2 illustre le cas où la température T2 d'injection de la résine est légèrement supérieure à la température T1 de polymérisation de la colle. Dans ce cas, l'injection de la résine est précédée d'une étape d'adaptation de la température du moule 10, permettant d'amener ce dernier à la température T2 d'injection de la résine. La durée t2 de cette étape d'adaptation de la température dépend de la différence entre les températures T2 et T1.

Dans le cas (non représenté) où la température T2 est inférieure à la température T1, le moule 10 peut être soit refroidi naturellement, soit refroidi au moyen d'un système de refroidissement intégré. Dans le cas illustré sur la figure 2 où la température T2 est légèrement supérieure à la température T1, le chauffage du moule 10 est poursuivi.

Dès que la température T2 d'injection de la résine est atteinte, cette injection est réalisée par le passage 14, sous une pression qui augmente progressivement jusqu'à une valeur PI. Dès le début de l'injection de la résine ou légèrement avant, une dépression est créée dans l'empreinte 12 du moule 10 par le passage 16, relié à cet effet à un circuit de vide (non représentée). A titre d'exemple, la valeur de cette dépression peut à être d'1 hPa.

Les caractéristiques de température et de pression concernant cette étape d'injection de la résine dépendent essentiellement de la nature de la résine injectée. A titre d'exemple, cette injection peut se faire à une température T2 d'environ 130°C et à une pression PI d'environ 3 hPa. A titre indicatif, la viscosité de la résine utilisée dans la technique de moulage par transfert de résine est habituellement comprise entre 10 mPa.s et 30 mPa.s.

La durée t3 de l'injection de la résine dépend principalement du volume de résine à injecter dans le moule 10, c'est-à-dire des dimensions du panneau à fabriquer. A titre d'illustration, l'étape d'injection peut durer environ 10 min.

Toujours sans ouvrir le moule 10, on procède ensuite à la polymérisation de la résine précédemment injectée, en maintenant la pression PI dans le moule. A cet effet, on élève la température du moule jusqu'à une température T3 correspondant à la température de polymérisation de la résine et on maintient cette température pendant un temps t4 nécessaire à l'achèvement de cette polymérisation. A titre d'illustration nullement limitative, la température T3 peut être par exemple d'environ 160°C et le temps t4 d'environ 2 heures.

Les étapes d'injection, puis de polymérisation de la résine sont des étapes classiques de la technique de moulage par transfert de résine.

Grâce au collage préalable, des membranes étanches 22 sur chacune des faces de l'âme 18 en nid d'abeilles, seuls les tissus 20 sont imprégnés de résine lors de l'injection de celles-ci. Un panneau dont les alvéoles restent vides de toute matière est ainsi obtenu, ce qui garantit la légèreté de ce panneau tout en permettant de bénéficier des avantages inhérents à la technique de moulage par transfert de résine.

En outre, du fait que le collage des membranes étanches 22 s'effectue avant le moulage par transfert de résine au cours du même cycle thermique et sans ouverture du moule, la durée de la fabrication n'est que très légèrement augmentée par rapport à une fabrication classique selon la technique de moulage par transfert de résine.

## Revendications

1. Procédé de fabrication d'un panneau en matériau composite, comprenant une âme (18) a cellules ouvertes, au moins une peau formée de fibres (20) et de résine, et une membrane étanche (22) interposée entre l'âme et la peau, ce procédé comprenant les étapes suivantes :
- mise en place de l'âme (18), d'un film (24) de colle non polymérisée, de la membrane étanche (22) et des fibres sèches (20), dans cet ordre, à l'intérieur d'un moule (10) ;
- fermeture du moule (10) ;
- polymérisation de la colle dans le moule fermé, de façon à coller la membrane étanche (22) sur l'âme (18) à cellules ouvertes ;
- injection de résine dans le moule (10), sans ouverture de celui-ci, de façon à imprégner les fibres (20) ;
- polymérisation de la résine dans le moule, sans ouverture de celui-ci, de façon à former la peau ; et
- démoulage du panneau ainsi obtenu.

2. Procédé selon la revendication 1, caractérisé par le fait que la polymérisation de la colle s'effectue à une première température et l'injection de la résine à une deuxième température au plus légèrement supérieure à la première température.

3. Procédé selon la revendication 2, caractérisé par le fait que la première et la deuxième températures étant égales, l'injection de la résine est effectuée immédiatement après la polymérisation de la colle.

4. Procédé selon la revendication 2, caractérisé par le fait que la première et la deuxième températures étant différentes, la polymérisation de la colle est suivie d'une étape d'adaptation de la température du moule (10) préalable à l'injection de la résine.

5. Procédé selon l'une quelconque des revendications précédentes, caractérisé par le fait qu'on utilise un film de colle non supporté.

6. Procédé selon l'une quelconque des revendications 1 à 4, caractérisé par le fait qu'on utilise un film de colle supporté par un tissu léger.

7. Procédé selon l'une quelconque des revendications précédentes, caractérisé par le fait qu'avant la fermeture du moule, on place aussi à l'intérieur de celui-ci des plaques de protection (26) encerclant des bordures périphériques de l'âme (18) à cellules ouvertes.

8. Procédé selon l'une quelconque des revendications précédentes, caractérisé par le fait qu'on place dans le moule (10) un film (24) de colle non polymérisée, une membrane étanche (22) et des fibres (20) sur chaque face de l'âme (18) à cellules ouvertes, de façon à fabriquer un panneau comprenant deux peaux.

9. Procédé selon l'une quelconque des revendications précédentes, caractérisé par le fait qu'on utilise une âme (18) à cellules ouvertes présentant une structure en nid d'abeilles.

10. Procédé selon l'une quelconque des revendications 1 à 8, caractérisé par le fait qu'on utilise une âme (18) constituée par une mousse à cellules ouvertes.

## Claims

1. Process for the production of a composite material panel having an open cell core (18), at least one skin formed from fibres (20) and resin, and a tight membrane (22) interposed between the core and the skin, said process comprising the following stages:
- putting into place of the core (18), an unpolymerized adhesive film (24), the tight membrane (22) and dry fibres (20), in this order, within a mould (10),
- closing the mould (10),
- polymerization of the adhesive in the closed mould, so as to adhere the tight membrane (22) to the open cell core (18),
- injection of resin into the mould (10), without opening the latter, so as to impregnate the fibres (20),
- polymerization of the resin in the mould, without opening the latter, so as to form the skin and
- demoulding the thus obtained panel.

2. Process according to claim 1, characterized in that the polymerization of the adhesive takes place at a first temperature and the injection of the resin at a second temperature, which at the most slightly exceeds the first temperature.

3. Process according to claim 2, characterized in that the first and second temperatures are equal, resin injection taking place immediately after the polymerization of the adhesive.

4. Process according to claim 2, characterized in that the first and second temperatures differ, the polymerization of the adhesive being followed by a stage of adapting the temperature of the mould prior to the injection of the resin.

5. Process according to any one of the preceding claims, characterized in that use is made of an unsupported adhesive film.

6. Process according to any one of the claims 1 to 4, characterized in that use is made of an adhesive film supported by a light fabric.

7. Process according to any one of the preceding claims, characterized in that, prior to the closing of the mould, within the latter are also placed protective plates (26) encircling the peripheral borders of the open cell core (18).

8. Process according to any one of the preceding claims, characterized in that in the mould (10) is placed an unpolymerized adhesive film (24), a tight membrane (22) and fibres (20) on each face of the open cell core (18), so as to produce a panel having two skins.

9. Process according to any one of the preceding claims, characterized in that use is made of an open cell core (18) with a honeycomb structure.

10. Process according to any one of the claims 1 to 8, characterized in that use is made of a core (18) constituted by an open cell foam.

## Patentansprüche

1. Verfahren zur Herstellung einer Platte aus Verbundmaterial mit einem Kern aus offenen Zellen, wenigstens einer aus Fasern (20) und Harz gebildeten Haut und einer dichten Membran (22), eingefügt zwischen den Kern und die Haut, wobei dieses Verfahren die folgenden Schritte umfaßt:
- Anbringen des Kerns (18), eines Films (24) aus nicht-polymerisiertem Klebstoff, der Membran (22) und der trockenen Fasern (20) in dieser Reihenfolge im Innern einer Form (10);
- Schließen der Form (10);
- Polymerisation des Klebstoffs in der geschlossenen Form, um die dichte Membran (22) auf dem Kern (18) aus offenen Zellen festzukleben;
- Einspritzen des Harzes in die Form (10) ohne diese zu öffnen, um die Fasern (20) zu imprägnieren;
- Polymerisation des Harzes in der Form, ohne diese zu öffen, um die Haut zu bilden; und
- Ausformen der derart hergestellten Tafel.

2. Verfahren nach Anspruch 1, dadurch gekennzeichnet, daß die Polymerisation des Klebstoffs bei einer ersten Temperatur erfolgt und die Einspritzung des Harzes bei einer zweiten, höchstens geringfügig höheren Temperatur als der ersten Temperatur.

3. Verfahren nach Anspruch 2, dadurch gekennzeichnet, daß die erste und die zweite Temperatur gleich sind und die Einspritzung des Harzes unmittelbar nach der Polymerisation des Klebstoffs erfolgt.

4. Verfahren nach Anspruch 2, dadurch gekennzeichnet, daß die erste und die zweite Temperatur verschieden sind und auf die Polymerisation des Klebstoffs ein Schritt der Anpassung der Temperatur der Form (10) folgt, vor der Einspritzung des Harzes.

5. Verfahren nach einem der vorangehenden Ansprüche, dadurch gekennzeichnet, daß man einen nicht-unterstützten Klebstoff-Film verwendet.

6. Verfahren nach einem der Ansprüche 1 bis 4, dadurch gekennzeichnet, daß man einen durch ein leichtes Gewebe unterstützten Klebstoff-Film verwendet.

7. Verfahren nach einem der vorangehenden Ansprüche, dadurch gekennzeichnet, daß man vor dem Schließen der Form auch in deren Innern Schutzplatten (26) anbringt, die periphere Ränder des Kerns aus offenen Zellen (18) einschließen.

8. Verfahren nach einem der vorangehenden Ansprüche, dadurch gekennzeichnet, daß man in der Form (10) auf jeder Seite des Kerns (18) aus offenen Zellen einen Film (24) aus nichtpolymerisiertem Klebstoff, eine dichte Membran (22) und Fasern (20) anbringt, um eine Tafel mit zwei Häuten herzustellen.

9. Verfahren nach einem der vorangehenden Ansprüche, dadurch gekennzeichnet, daß man einen Kern (18) aus offenen Zellen mit einer Bienenwaben-Struktur verwendet.

10. Verfahren nach einem der Ansprüche 1 bis 8, dadurch gekennzeichnet, daß man einen Kern (18)verwendet, der durch einen Schaum mit offenen Zellen gebildet wird.
